(19) Europäisches Patentamt / European Patent Office / Office européen des brevets

(11) **EP 2 021 605 B1**

(12) **FASCICULE DE BREVET EUROPEEN**

(45) Date de publication et mention de la délivrance du brevet:
**14.11.2018 Bulletin 2018/46**

(21) Numéro de dépôt: **07731935.8**

(22) Date de dépôt: **24.04.2007**

(51) Int Cl.:
*F02D 41/02* ^(2006.01)    *F02D 41/04* ^(2006.01)
*F01N 9/00* ^(2006.01)    *F02D 41/22* ^(2006.01)
*F02D 41/40* ^(2006.01)

(86) Numéro de dépôt international:
**PCT/FR2007/051162**

(87) Numéro de publication internationale:
**WO 2007/132104 (22.11.2007 Gazette 2007/47)**

(54) **SYSTÈME DE COMMANDE DU DÉCLENCHEMENT D'UNE PURGE DE MOYENS FORMANT PIÈGE À NOX**

SYSTEM ZUR STEUERUNG DES AUSLÖSENS EINER REGENERATION EINER STICKOXIDFALLE

SYSTEM FOR CONTROLLING THE TRIGGERING OF A PURGE of a NOX TRAP

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **16.05.2006 FR 0651758**

(43) Date de publication de la demande:
**11.02.2009 Bulletin 2009/07**

(73) Titulaire: **PSA Automobiles SA**
**78300 Poissy (FR)**

(72) Inventeurs:
• **AUDOUIN, Arnaud**
**75018 Paris (FR)**
• **FROUVELLE, Benoît**
**75015 Paris (FR)**

(74) Mandataire: **Ménès, Catherine et al**
**PSA Automobiles SA**
**VPIB - LG081**
**18 rue des Fauvelles**
**92250 La Garenne Colombes (FR)**

(56) Documents cités:
EP-A1- 1 203 877    EP-A2- 1 134 397
WO-A-2004/046529    FR-A1- 2 866 957
FR-A1- 2 872 215

EP 2 021 605 B1

**Description**

La présente invention concerne un système de commande du déclenchement d'une purge de moyens de dépollution comportant des moyens formant piège à NOx, intégrés dans une ligne d'échappement d'un moteur de véhicule automobile.

Plus particulièrement, ce système de commande se rapporte au déclenchement d'une purge de tels moyens par basculement du fonctionnement du moteur entre des modes pauvre normal et riche de purge, qui comporte des moyens formant contrôleur de purge de pilotage du basculement du fonctionnement du moteur entre ces modes pauvre et riche pour déclencher ou non une purge sous la commande de moyens formant superviseur de purge de décision de déclenchement ou non de la purge.

On sait en effet qu'une réduction significative des NOx émis par un moteur par exemple Diesel de véhicule automobile, à l'aide d'un catalyseur de type piège à NOx, peut être obtenue en post-traitement par utilisation de tels moyens de dépollution.

Le principe de fonctionnement d'un tel catalyseur est de permettre un stockage des NOx dans le catalyseur par formation de complexes stables de type $Ba(NO_3)_2$. Ce stockage des NOx a lieu lors du fonctionnement normal du moteur, par exemple Diesel, en mélange pauvre, c'est-à-dire en excès d'oxygène. Lorsque le catalyseur est saturé en NOx, il est nécessaire de le purger afin de relâcher et réduire les NOx stockés dans le piège. Ceci peut être réalisé par exemple en basculant le fonctionnement du moteur en mode de combustion riche, c'est-à-dire en excès de carburant.

De façon typique, l'efficacité de stockage d'un tel piège décroît à mesure que celui-ci se remplit en NOx. Il est par conséquent possible d'obtenir une conversion NOx différente selon l'espacement entre les purges et la durée de ces purges.

De même, la quantité de NOx stockable dans le piège n'est pas une constante, car elle dépend de la température du catalyseur et donc de la température des gaz d'échappement. Une même séquence alternant des modes de fonctionnement pauvre et riche, par exemple 100s en pauvre et 5s en riche, conduit à une conversion différente selon la température à laquelle la séquence est opérée.

Enfin, la réduction des NOx qui nécessite un passage du moteur en mode de combustion riche entraîne une augmentation de la consommation ainsi qu'une augmentation de la dilution de gazole dans le lubrifiant du moteur en raison notamment de l'utilisation de post-injections.

Il est donc nécessaire de connaître et de contrôler la surconsommation du moteur engendrée par le fonctionnement du piège à NOx.

L'optimisation de la conversion des NOx dans un piège à NOx doit donc prendre en compte un grand nombre de paramètres (paramètres moteur, grandeurs physiques, etc..). Le choix du déclenchement et de l'arrêt des purges est donc déterminant de la performance du système de post-traitement, conversion NOx atteinte, surconsommation associée et pénalité pour les autres polluants.

L'application d'un piège à NOx sur un véhicule par exemple Diesel, nécessite donc des stratégies permettant la gestion autonome des purges. Ces stratégies doivent être définies de façon à optimiser les différentes prestations attendues du système (conversion NOx, surconsommation, etc..). En pratique, ces stratégies sont implantées dans un calculateur de contrôle moteur et elles ont pour but de piloter le fonctionnement du catalyseur en interaction avec le reste des stratégies de contrôle de ce moteur.

Le document EP 1 134 397 A2 divulgue un exemple pertinent.

A cet effet, l'invention a pour objet un système de commande du déclenchement d'une purge de moyens de dépollution comportant des moyens formant piège à NOx, intégrés dans une ligne d'échappement d'un moteur de véhicule automobile, par basculement du fonctionnement de celui-ci entre des modes pauvre normal et riche de purge, du type comportant des moyens formant contrôleur de purge de pilotage du basculement du fonctionnement du moteur entre ces modes pauvre et riche, pour déclencher ou non une purge, sous la commande de moyens formant superviseur de purge de décision de déclenchement ou non de la purge, caractérisé en ce que les moyens formant superviseur de purge sont raccordés à des moyens de détermination d'une surconsommation autorisée en fonction de conditions de roulage du véhicule et des moyens d'estimation d'une surconsommation anticipée en carburant du moteur en cas de déclenchement d'une purge pour valider ou inhiber le déclenchement d'une purge selon que cette surconsommation anticipée estimée est inférieure ou supérieure à la surconsommation autorisée déterminée, et en ce que les moyens de détermination de la surconsommation autorisée comprennent des moyens d'acquisition de la vitesse du véhicule et du couple du moteur, et des moyens de calcul sur la surconsommation autorisée aptes à calculer les conditions de roulage en fonction de la vitesse et du couple acquis et à calculer la surconsommation autorisée en fonction des conditions de roulage calculées.

De plus, les moyens de calcul de la surconsommation autorisée comprennent :

- des moyens de sélection d'un type de roulage actuellement pratiqué par le véhicule parmi en ensemble prédéterminé de types de roulage ;

- des moyens de sélection d'une tendance globale de roulage pratiqué par le véhicule sur une période de temps prédéterminée parmi un ensemble prédéterminé de tendances globales de roulage ; et
- des moyens de calcul de la surconsommation autorisée en fonction du type de roulage et de la tendance de roulage sélectionnés.

Selon d'autres caractéristiques :

- les moyens de sélection du type de roulage sont aptes à calculer un critère de roulage selon la relation CritR = $V*(1+K*C)$, où CritR est le critère de roulage, V est la vitesse du véhicule acquise, C est le couple du moteur acquis et K est un paramètre prédéterminé de correction du couple moteur, et à sélectionner le type de roulage en fonction du critère de roulage calculé ;
- les moyens de sélection du type de roulage sont aptes à calculer une moyenne du critère de roulage sur une première période de temps prédéterminée et à sélectionner le type de roulage en fonction de l'appartenance de ladite moyenne à des plages prédéterminées de valeurs ;
- les moyens de sélection de la tendance de roulage sont aptes à calculer le pourcentage de temps passé, dans une période de temps prédéterminée, par le véhicule dans chaque type de roulage de l'ensemble prédéterminé de roulage, et à sélectionner la tendance de roulage en fonction des pourcentages calculés ;
- les moyens de détermination de la surconsommation autorisée comporte en outre des moyens d'estimation d'un taux de dilution de l'huile de lubrification par du carburant, et en ce que les moyens de calcul de la surconsommation autorisée sont aptes à calculer celle-ci en fonction du taux de dilution estimé ;
- les moyens de calcul de la surconsommation autorisée sont aptes à calculer pour celle-ci une valeur décroissante à mesure que le taux de dilution présente un degré croissant de dangerosité pour le fonctionnement du moteur ;
- les moyens de calcul de la surconsommation autorisée sont aptes à régler celle-ci sur zéro lorsque le degré de dangerosité est déterminé comme critique ; et
- les moyens de calcul de la surconsommation autorisée sont aptes à déterminer le degré de dangerosité en fonction du taux de dilution estimé et d'un nombre de kilomètre parcouru par le véhicule depuis sa dernière vidange.

L'invention sera mieux comprise à la lecture de la description qui va suivre, donnée uniquement à titre d'exemple et faite en se référant aux dessins annexés, sur lesquels :

- la figure 1 est un schéma synoptique illustrant la structure et le fonctionnement d'un module de superviseur deNox intégré dans un calculateur de contrôle moteur ;
- la figure 2 est un schéma synoptique illustrant la structure et le fonctionnement de moyens de détermination de surconsommation autorisée intégrés dans un système selon l'invention ;
- la figure 3 est un graphique de plages de valeur représentatives d'un classement de dangerosité du taux de dilution de l'huile de lubrification du moteur ;
- la figure 4 est un schéma synoptique illustrant la structure et le fonctionnement de moyens d'estimation de surconsommation anticipée intégrés dans un système selon l'invention ;
- la figure 5 sont des courbes illustrant une surconsommation anticipée sur un cycle MVEG ; et
- les Figure 6 et 7 sont des courbes illustrant le positionnement des purges pour deux seuils de surconsommation autorisés.

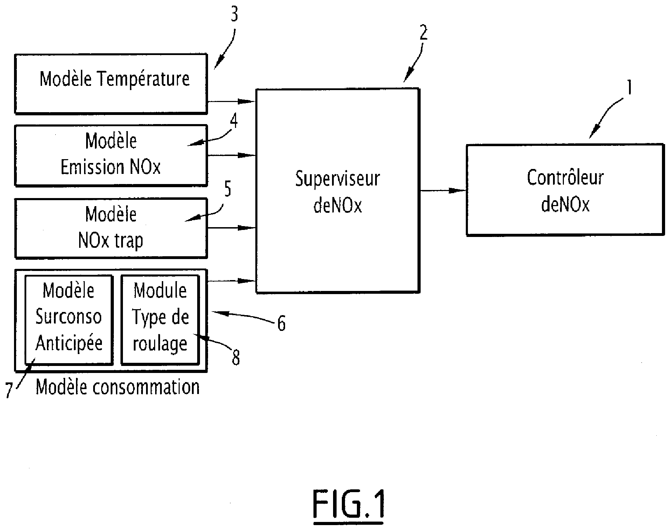

On a en effet illustré sur la figure 1, un schéma synoptique illustrant l'intégration d'un système de commande du déclenchement d'une purge de moyens de dépollution comportant des moyens formant piège à NOx, intégrés dans une ligne d'échappement d'un moteur, par exemple Diesel, de véhicule automobile.

En fait, une telle purge est déclenchée par basculement du fonctionnement du moteur entre des modes pauvre normal et riche de purge, sous le contrôle de moyens formant contrôleur de purge de pilotage de ce basculement du fonctionnement de ce moteur entre ces modes pauvre et riche, pour déclencher ou non une purge.

Ce contrôleur deNOx est désigné par la référence générale 1 sur cette figure 1 et est commandé par des moyens formant superviseur de purge de décision de déclenchement ou non de la purge, ce superviseur deNOx étant désigné par la référence générale 2.

En fait, ce superviseur est relié à un certain nombre de modèles, tels que par exemple un modèle de température désigné par la référence générale 3, un modèle d'émission de NOx désigné par la référence générale 4, un modèle de piège à NOx 5 et un modèle de surconsommation désigné par la référence générale 6.

Ainsi, le système selon l'invention permet de maîtriser la stratégie de gestion et de contrôle de la surconsommation liée aux purges du piège à NOx par passage en mode de fonctionnement riche du moteur.

Ce système intervient alors dans la décision du superviseur deNOx de lancer ou non une purge deNOx. La décision deNOx s'appuie sur des paramètres moteur mesurés ainsi que sur différentes grandeurs physiques modélisées telles que par exemple délivrées par les modèles 3, 4, 5 et 6, de température, d'émission de NOx, de piège à NOx et de consommation respectivement.

De façon typique, une purge en mode de fonctionnement riche est décidée lorsque cela devient nécessaire comme par exemple lorsque la masse de NOx stockée dans le piège à NOx atteint un seuil prédéterminé et que cela est possible lorsque par exemple la température dépasse un seuil déterminé. La décision de lancer une purge est ensuite transmise au contrôleur deNOx désigné par la référence générale 1, chargé de réaliser la purge en modifiant par exemple les paramètres de fonctionnement du moteur pour passer en mode de combustion riche.

Comme cela a été indiqué précédemment, les purges en riche engendrent une surconsommation ponctuelle ainsi qu'une augmentation de la dilution de gazole dans l'huile de lubrification du moteur. La décision de lancer une purge doit donc tenir compte de cette contrainte moteur. Le modèle de surconsommation désigné par la référence générale 6 sur cette figure 1 transmet au superviseur deNOx une autorisation ou non de purger et se découpe en deux sous modules, à savoir un modèle de surconsommation anticipée désigné par la référence générale 7, dont le but est de déterminer à chaque instant la surconsommation que générerait une purge si elle était effectuée à cet instant. L'autre module est un module de type de roulage désigné par la référence générale 8, qui détermine les conditions de roulage présentes et passées du véhicule et y associe une consommation autorisée. Ensuite, si la surconsommation anticipée déterminée par le modèle de surconsommation anticipée 7 est inférieure à la surconsommation autorisée, une autorisation de purge est transmise au superviseur de NOX 2.

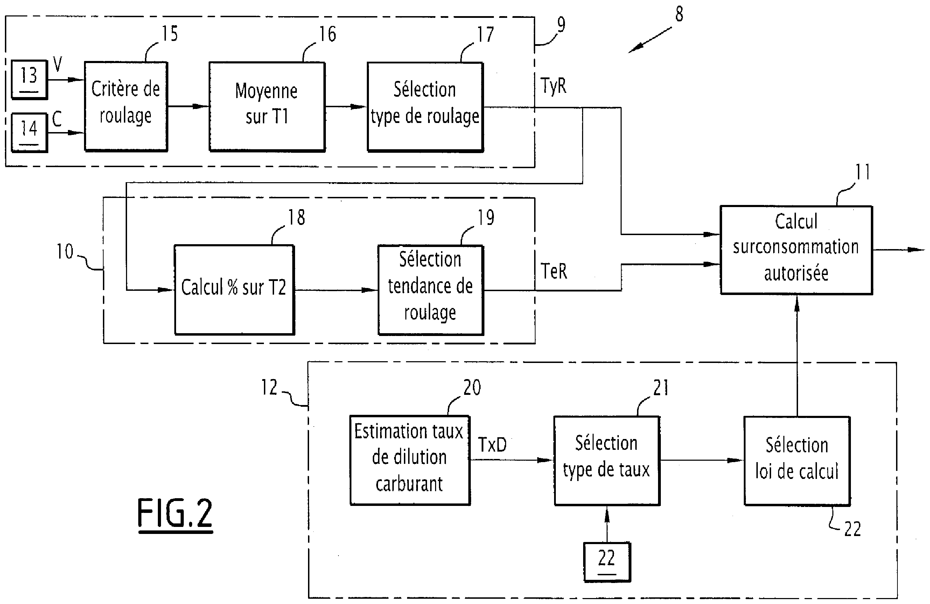

La figure 2 est un schéma synoptique du module 8 de type de roulage.

Ce module 8 de type de roulage comporte une unité 9 de détermination d'un type de roulage TyR actuellement pratiqué par le véhicule, une unité 10 de détermination d'une tendance de roulage TeR du véhicule, une unité 11 de calcul de la surconsommation autorisée en fonction du type de roulage TyR et de la tendance de roulage TeR et à partir d'une loi de calcul prédéterminée.

Le module 8 comporte également une unité 12 estimant un taux de dilution TxD de l'huile de lubrification du moteur par du carburant et sélectionnant la loi de calcul mise en oeuvre par l'unité 11 en fonction du taux de dilution estimé.

L'unité 9 comportent des capteurs 13, 14 mesurant la vitesse V du véhicule et du couple moteur indiqué C.

Ces capteurs 13, 14 sont raccordés à un sous-module 15 de calcul d'un critère de roulage CritR selon la relation :

$$CritR(t) = V(t)*(1+K*C(t))$$

où t est le temps, K est un coefficient prédéterminé de correction du couple moteur indiqué dépendant d'un rapport poids/puissance du véhicule et/ou tenant compte de différences entre des applications BVA et BVM (Boîtes de Vitesses Automatique et Mécanique).

L'unité 9 comprend également, connecté au sous-module 15, un sous-module 16 de calcul de moyenne apte à calculer et délivrer un critère de roulage moyenné $\overline{CritR}$ selon la relation :

$$\text{pour } kT1 \le t < (k+1)T1, \ \overline{CritR}(t) = \frac{1}{T1} \int_{(k-1)T1}^{kT1} CritR(u)du$$

où T1 est durée prédéterminée, et k est un entier positif.

Le critère de roulage moyenné est alors délivré par le sous-module 16 à un sous-module 17 de l'unité 9, qui sélectionne le type de roulage TyR actuellement pratiqué par le véhicule parmi l'ensemble constitué des types de roulages « en ville sévère », « en ville moyenne », « sur route », « sur autoroute » et « en montage ».

Plus particulièrement, le sous-module 17 met en oeuvre la loi de sélection suivante :

- si $\overline{CritR} < s1$, alors TyR = ville sévère ;
- si $s1 \le \overline{CritR} < s2$, alors TyR = ville moyenne ;
- si $s2 \le \overline{CritR} < s3$, alors TyR = route ;
- si $s3 \le \overline{CritR} < s4$, alors TyR = autoroute ; et
- si $s4 \le \overline{CritR}$, alors TyR = montagne.

où s1, s2, s3 et s4 sont des valeurs de seuils prédéterminées telles que s1<s2<s3<s4.

L'unité 10 de détermination de la tendance de roulage TeR comporte quant à elle un sous-module 18 connecté au sous-module 17 de sélection du type de roulage de l'unité 9 et calculant le pourcentage de temps passé par le véhicule dans chacun des types de roulage précités sur les T2 dernières secondes, où T2 est un nombre prédéterminé.

L'unité 10 comprend enfin un sous-module 19, connecté au sous-module 18, qui reçoit les pourcentages calculés et sélectionne en fonction de ceux-ci la tendance de roulage TeR du véhicule parmi un ensemble de tendances de roulage constitué d'une tendance de roulage « en ville », une tendance de roulage « autoroute », une tendance de roulage « route » et une tendance de roulage « mixte » correspondant à une situation où aucune des tendances précédentes ne prédomine.

Plus particulièrement, le sous-module 19 met en oeuvre la loi de sélection suivante, X1, X2, X3, X4 et X5 étant respectivement les pourcentages calculés de temps passé par le véhicule dans les types de roulage ville sévère, ville moyenne, route, autoroute et montagne :

- si X1+X2 > st1, alors TeR = ville ;
- si X3+X4+X5>st2 et X3+X4 > st3, alors TeR = route ;
- si X3+X4+X5> st2 et X3+X4 ≤ st3, alors TeR = autoroute ; et
- sinon TeR = mixte.

où st1, st2 et st3 sont des valeurs prédéterminées de seuil.

De préférence, st1 et st2 sont choisies chacune supérieure ou égale à 50%, et st3 est choisie inférieure ou égale à st2.

La tendance de roulage TeR est réinitialisée à chaque nouveau démarrage du moteur, et plus particulièrement réinitialisée à la tendance route.

L'unité 11 de détermination de la surconsommation autorisé reçoit le type de roulage TyR et la tendance de roulage TeR déterminés et évalue en fonction de ceux-ci une cartographie prédéterminée de surconsommations autorisées pour déterminer la surconsommation autorisée.

Cette cartographie de l'unité 11 est de manière avantageuse sélectionnée par l'unité 12 d'estimation du taux de dilution TxD.

Cette unité 12 comporte à cet effet un sous-module 20 d'estimation du taux de dilution TxD de l'huile de lubrification du moteur par le carburant utilisé par celui-ci, par exemple un capteur de dilution agencé dans le réservoir d'huile du moteur ou un système d'estimation de ce taux tel que décrit dans la demande française 2 866 957 au nom de la Demanderesse.

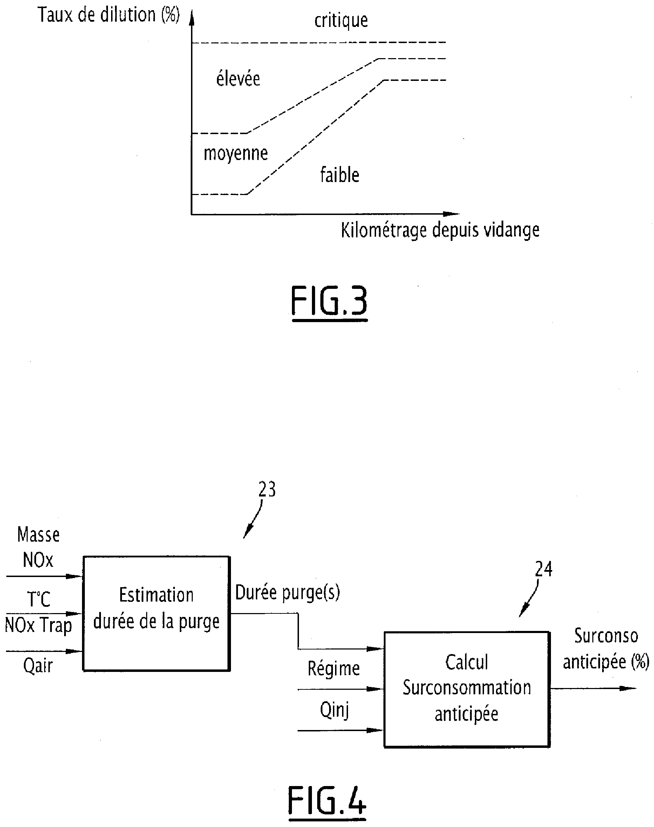

Un sous-module 21 de l'unité 12 réalise par ailleurs une classification de la dangerosité du taux de dilution estimé pour le fonctionnement du moteur. Plus particulièrement, ce sous-module 21 est connecté à un compteur du nombre de kilomètres Km parcourus par le véhicule depuis sa dernière vidange et détermine que le taux de dilution présente l'un parmi les degré de dangerosité « faible », « moyen », « élevé » et « critique », en fonction de l'appartenance du couple (TxD, Km) à une plage de valeur d'un ensemble prédéterminé de plages de valeurs. Ces plages de valeurs sont représentatives respectivement des degrés de dangerosité précités et sont illustrées à la figure 3.

Le degré de dangerosité sélectionné par le sous-module 21 est alors délivré à un sous-module 22 de l'unité 12 qui sélectionne une cartographie de surconsommation correspondante parmi un ensemble prédéterminé de cartographies et délivre celle-ci à l'unité 11 de calcul de la surconsommation autorisée.

Pour un même couple (TdX, Km) de valeurs de taux de dilution et de nombre de kilomètres, les valeurs des cartographies de surconsommations autorisées du sous-module 22 sont décroissantes à mesure que le degré de dangerosité s'élève, pour atteindre zéro lorsque ce degré est critique.

La figure 4 illustre le schéma synoptique d'un exemple de réalisation du modèle de surconsommation.

En fait, le calcul de surconsommation anticipée est basé sur deux moyens spécifiques, à savoir des moyens d'estimation de la durée de purge désignés par la référence générale 23, et des moyens d'estimation de la surconsommation anticipée désignés par la référence générale 24.

Les moyens d'estimation de la durée de purge reçoivent en entrée un certain nombre d'informations issues par exemple des modèles décrits précédemment et permettant de délivrer à ces moyens, différentes grandeurs physiques dont dépend la durée de purge et notamment la masse de NOx stockée dans le piège, la température du catalyseur piège à NOx qui détermine la vitesse de réduction des NOx stockés, la vitesse des gaz, la richesse des gaz, etc...

En pratique, une cartographie dépendant du débit d'air en mode riche déterminée par une cartographie dépendant du point de fonctionnement du moteur et de la température du catalyseur NOx estimée dans le modèle température décrit précédemment, détermine un débit de purge en g/s, c'est-à-dire la quantité de NOx stockée dans le catalyseur et réduite par les gaz par seconde. Ce débit de purge est ensuite multiplié par la masse de NOx stockée dans le catalyseur estimée dans le modèle de piège à NOx, ce qui donne une durée de purge estimée.

La mise au point de ce module nécessite donc la calibration de plusieurs cartographies, et en particulier une cartographie de débit d'air en mode de fonctionnement riche qui est une cartographie spécifique au moteur considéré et qui correspond au débit d'air mesuré en riche lors de la calibration du moteur et une cartographie de débit de purge qui est une cartographie calibrée par des essais sur banc de gaz synthétique. La vitesse de réduction est ainsi mesurée pour différentes températures et débit de gaz et elle est spécifique de la technologie piège à NOx considérée, c'est-à-dire en fait de la formulation du piège à NOx.

Cette information de durée de purge est ensuite transmise à des moyens de calcul de la surconsommation anticipée.

Cette surconsommation anticipée c'est-à-dire la surconsommation que l'on obtiendrait par la purge si on l'effectuait à cet instant et dans ces conditions est déterminée par la relation :

$$\text{Surconso } \% = \text{conso si purge} - \text{conso si pas purge} / \text{conso si pas purge.}$$

La surconsommation anticipée est moyennée sur un temps calibrable.

De façon typique, on détermine la surconsommation moyenne sur une période de temps par exemple de X minutes passées que générerait une purge si on l'effectuait à cet instant.

Pour cela, la consommation si purge est déterminée en cumulant la quantité de carburant injectée pendant les X minutes passées et en ajoutant la quantité de carburant que l'on injecterait en riche pendant la durée de la purge. En pratique, la quantité de carburant pendant les X minutes est issue d'une intégration des valeurs de consommations instantanées lues dans une table de consommation de fonctionnement en mode pauvre et la quantité de carburant que l'on injecterait est la multiplication du temps estimé de purge par la valeur instantanée de la consommation lue dans une cartographie de consommation en mode riche.

La consommation si pas de purge est déterminée en cumulant la quantité de carburant injectée pendant les X minutes passées et en ajoutant la quantité de carburant que l'on injecterait en mode pauvre de fonctionnement pendant la durée de purge.

La consommation en modes de fonctionnement riche et pauvre est déterminée par cartographie du régime et du débit de carburant injecté. Ces cartographies sont spécifiques au moteur considéré et sont déterminées lors de la calibration du moteur.

Ainsi, à chaque instant, il est possible de connaître la surconsommation qu'engendrerait une purge si elle était réalisée dans les conditions présentes de roulage. Cette surconsommation anticipée est comme cela a été indiqué précédemment, moyennée sur un temps calibrable.

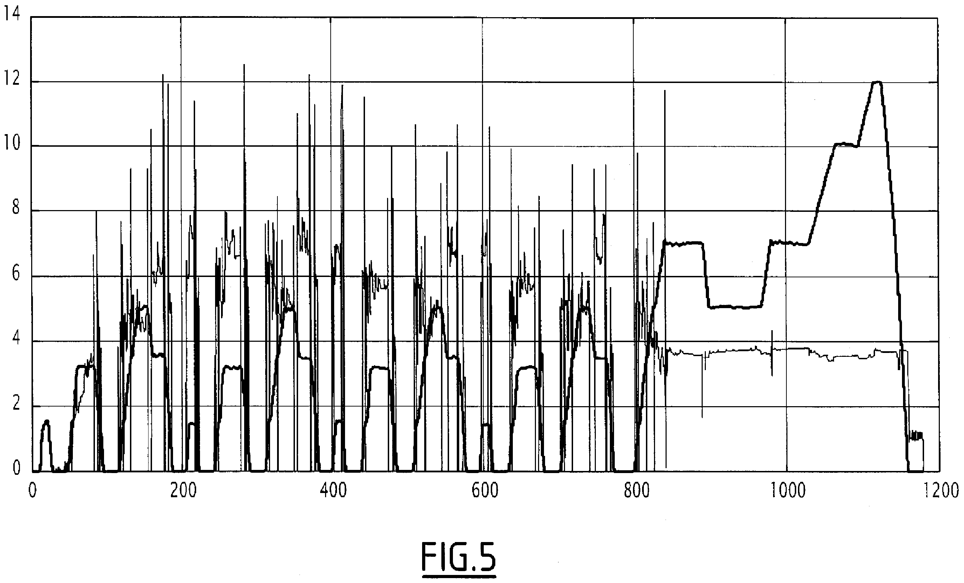

Un tel système a été implanté pour des essais sur un moteur de véhicule Diesel et à titre d'exemple, l'évolution de la valeur de surconsommation anticipée, calculée à chaque instant par la stratégie, est tracée sur le cycle MVEG illustré sur la figure 5.

Ainsi, au démarrage du cycle, le piège est faiblement chargé en NOx, la surconsommation anticipée pour purger cette faible quantité reste donc limitée. Elle augmente progressivement jusqu'à 6 à 8% au fur et à mesure que le piège se charge en NOx. Sur la partie urbaine du cycle, de 200 à 800s, la température du piège à NOx est relativement faible, car les gaz d'échappement sont froids, le débit de purge est donc faible, ce qui se traduit par une surconsommation anticipée relativement élevée.

Au delà de 800s, sur la partie extra urbaine du cycle, la température des gaz d'échappement est plus élevée et la surconsommation anticipée baisse donc jusqu'à 4%.

Les premiers roulages effectués ont mis en évidence la nécessité de contrôler la surconsommation engendrée par le fonctionnement du piège à NOx. Les paramètres du catalyseur, masse de NOx stockée, température, etc..., permettent de gérer au mieux ce piège à NOx, mais ne prennent pas en compte les contraintes liées au moteur. A titre d'exemple, si l'on considère un véhicule circulant à 130 km/h, la température des gaz d'échappement est favorable pour déclencher la purge, les émissions de NOx en sortie du moteur étant élevées.

Dans ces conditions, des demandes de purges très fréquentes seraient demandées, conduisant à une surconsommation beaucoup trop élevée de l'ordre de 10%. Les stratégies de contrôle de la surconsommation permettent alors de limiter le nombre de purges et de rester dans des surconsommations raisonnables.

Différentes stratégies pour contrôler la surconsommation ont été testées dans le cadre du développement de ce système. Notamment, il a été envisagé de contrôler la surconsommation non pas sur le déclenchement, mais sur l'arrêt de la purge.

De façon typique, la purge est interrompue lorsque la surconsommation générée excède un seuil calibré.

Dans la pratique, cette stratégie s'avère moins efficace. Cela conduit à des purges fréquentes, mais interrompues rapidement, ce qui est moins efficace à plusieurs points de vue que des purges plus espacées mais complètes.

En particulier :

- la réduction des NOx est plus efficace lorsqu'une grande quantité de NOx est stockée dans le piège, la vitesse de réduction en g/s étant plus élevée pour une masse de NOx élevée, et
- la transition de pauvre à riche n'est pas instantanée, aussi la transition pauvre/riche représente un coût en surconsommation qui ne permet pas de convertir les NOx stockés. Il est donc opportun de réaliser des purges espacées mais plus longues pour limiter le nombre de transitions.

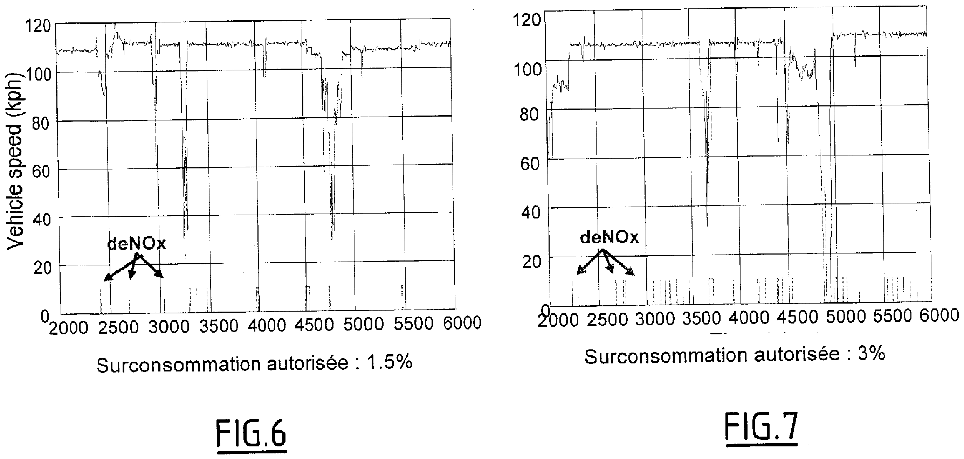

Comme cela est illustré sur les figures 6 et 7, la stratégie de surconsommation anticipée permet d'espacer au maximum les purges en respectant la surconsommation que l'on s'autorise. Ainsi, la stratégie permet d'assurer que l'on obtient la conversion NOx la plus élevée pour la surconsommation que l'on se fixe.

L'intérêt majeur est donc de baser le contrôle de la surconsommation sur le déclenchement de la purge et non sur l'arrêt de celle-ci. Pour cela, un calcul d'une surconsommation anticipée est mis en place et permet de prendre la décision de lancer une purge en anticipant son coût en terme de surconsommation. La stratégie permet de fixer des seuils de surconsommation que l'on autorise et de s'assurer que pour cette pénalité en consommation, la conversion NOx maximale est obtenue.

Bien entendu, différents modes de réalisation encore peuvent être envisagés.

## Revendications

1. Système de commande du déclenchement d'une purge de moyens de dépollution comportant des moyens formant piège à NOx, intégrés dans une ligne d'échappement d'un moteur de véhicule automobile, par basculement du fonctionnement de celui-ci entre des modes pauvre normal et riche de purge, du type comportant des moyens (1) formant contrôleur de purge de pilotage du basculement du fonctionnement du moteur entre ces modes pauvre et riche, pour déclencher ou non une purge, sous la commande de moyens (2) formant superviseur de purge de décision de déclenchement ou non de la purge, dans lequel les moyens (2) formant superviseur de purge sont raccordés à des moyens (6, 8) de détermination d'une surconsommation autorisée en fonction de conditions de roulage du véhicule et des moyens (6, 7) d'estimation d'une surconsommation anticipée en carburant du moteur en cas de déclenchement d'une purge pour valider ou inhiber le déclenchement d'une purge selon que cette surconsommation anticipée estimée est inférieure ou supérieure à la surconsommation autorisée déterminée, et les moyens (6,8) de détermination de la surconsommation autorisée comprennent des moyens (13,14) d'acquisition de la vitesse du véhicule et du couple du moteur, et des moyens (9, 10, 11, 12) de calcul de la surconsommation autorisée, aptes à calculer les conditions de roulage en fonction de la vitesse et du couple acquis et à calculer la surconsommation autorisée en fonction des conditions de roulage calculées, caractérisé en comprenant

   - des moyens (9) de sélection d'un type de roulage actuellement pratiqué par le véhicule parmi un ensemble prédéterminé de types de roulage ;
   - des moyens (10) de sélection d'une tendance globale de roulage pratiqué par le véhicule sur une période de temps prédéterminée parmi un ensemble prédéterminé de tendances globales de roulage ; et
   - des moyens (11) de calcul de la surconsommation autorisée en fonction du type de roulage et de la tendance de roulage sélectionnés.

2. Système selon la revendication 1, **caractérisé en ce que** les moyens (9) de sélection du type de roulage sont aptes à calculer un critère de roulage selon la relation CritR = V*(1+K*C), où CritR est le critère de roulage, V est la vitesse du véhicule acquise, C est le couple du moteur acquis et K est un paramètre prédéterminé de correction du couple moteur, et à sélectionner le type de roulage en fonction du critère de roulage calculé.

3. Système selon la revendication 2, **caractérisé en ce que** les moyens (9) de sélection du type de roulage sont aptes à calculer une moyenne du critère de roulage sur une première période de temps prédéterminée et à sélectionner le type de roulage en fonction de l'appartenance de ladite moyenne à des plages prédéterminées de valeurs.

4. Système selon l'une quelconque des revendications précédentes, **caractérisé en ce que** les moyens (10) de sélection de la tendance de roulage sont aptes à calculer le pourcentage de temps passé, dans une période de temps prédéterminée, par le véhicule dans chaque type de roulage de l'ensemble prédéterminé de roulage, et à sélectionner la tendance de roulage en fonction des pourcentages calculés.

5. Système selon l'une quelconque des revendications précédentes, **caractérisé en ce que** les moyens (6,8) de détermination de la surconsommation autorisée comporte en outre des moyens (12) d'estimation d'un taux de dilution de l'huile de lubrification par du carburant, et **en ce que** les moyens (9, 10, 11, 12) de calcul de la surconsommation autorisée sont aptes à calculer celle-ci en fonction du taux de dilution estimé.

**6.** Système selon la revendication 5, **caractérisé en ce que** les moyens (9, 10, 11, 12) de calcul de la surconsommation autorisée sont aptes à calculer pour celle-ci une valeur décroissante à mesure que le taux de dilution présente un degré croissant de dangerosité pour le fonctionnement du moteur.

**7.** Système selon la revendication 6, **caractérisé en ce que** les moyens (9, 10, 11, 12) de calcul de la surconsommation autorisée sont aptes à régler celle-ci sur zéro lorsque le degré de dangerosité est déterminé comme critique.

**8.** Système selon la revendication 6 ou 7, **caractérisé en ce que** les moyens (9, 10, 11, 12) de calcul de la surconsommation autorisée sont aptes à déterminer le degré de dangerosité en fonction du taux de dilution estimé et d'un nombre de kilomètre parcouru par le véhicule depuis sa dernière vidange.


**Patentansprüche**

**1.** System zum Steuern des Auslösens einer Regeneration von Reinigungsmitteln, die Mittel umfassen, die eine NOx-Falle bilden, die in einen Abgasstrang eines Kraftfahrzeugmotors integriert sind, durch Umschalten des Betriebs dieses zwischen dem normalen mageren Betrieb und reichenhaltigen Regenerationsbetrieb vom Typ, der Mittel (1) umfasst, die einen Regenerationscontroller zum Steuern des Umschaltens des Betriebs des Motors zwischen dieser mageren Betriebsart und reichhaltigen Betriebsarten bildet, um eine Regeneration auszulösen oder nicht, unter der Steuerung von Mitteln (2), die einen Regenerationssupervisor zum Entscheiden des Auslösens oder nicht der Regeneration bilden,
wobei die Mittel (2), die einen Regenerationssupervisor bilden, an Mittel (6, 8) zum Bestimmen eines übermäßigen Verbrauchs angeschlossen sind, der in Abhängigkeit von Fahrbedingungen des Fahrzeugs gestattet wird, und Mittel (6, 7) zum Schätzen eines vorweggenommenen übermäßigen Kraftstoffverbrauchs des Motors bei Auslösen einer Regeneration, um das Auslösen einer Regeneration zu bestätigen oder das Auslösen einer Regeneration je nachdem zu inhibieren, ob dieser vorweggenommene übermäßige Verbrauch kleiner oder größer ist als der bestimmte gestattete übermäßige Verbrauch,
und Mittel (6, 8) zum Bestimmen des gestatteten übermäßigen Verbrauchs, die Mittel (13, 14) zum Erfassen der Geschwindigkeit des Fahrzeugs und des Drehmoments des Motors umfassen, und Mittel (9, 10, 11, 12) zum Berechnen des gestatteten übermäßigen Verbrauchs, die geeignet sind, um die Fahrbedingungen in Abhängigkeit von der erfassten Geschwindigkeit und dem erfassten Drehmoment zu berechnen und den gestatteten übermäßigen Verbrauch in Abhängigkeit von den berechneten Fahrbedingungen zu berechnen,
**dadurch gekennzeichnet, dass** es Folgendes umfasst

- Mittel (9) zum Auswählen eines derzeit von dem Fahrzeug ausgeführten Fahrtyps aus einer vorbestimmten Einheit von Fahrtypen;
- Mittel (10) zum Auswählen eines globalen Fahrtrends, der von dem Fahrzeug während einer vorbestimmten Zeitspanne aus einer vorbestimmten Einheit globaler Fahrtrends ausgeführt wird; und
- Mittel (11) zum Berechnen des gestatteten übermäßigen Verbrauchs in Abhängigkeit von dem ausgewählten Fahrtyp und dem ausgewählten Fahrtrend.

**2.** System nach Anspruch 1, **dadurch gekennzeichnet, dass** die Mittel (9) zum Auswählen des Fahrtyps geeignet sind, um ein Fahrkriterium gemäß der Beziehung CritR = V*(1+K*C) zu berechnen, wobei CritR das Fahrkriterium ist, V die erfasste Geschwindigkeit des Fahrzeugs ist, C das erfasste Motordrehmoment ist und K ein vorbestimmter Korrekturparameter des Motordrehmoments ist, und den Fahrtyp in Abhängigkeit von dem berechneten Fachkriterium auszuwählen.

**3.** System nach Anspruch 2, **dadurch gekennzeichnet, dass** die Mittel (9) zum Auswählen des Fahrtyps geeignet sind, um einen Durchschnitt des Fahrkriteriums auf einer ersten vorbestimmten Zeitspanne zu berechnen und den Fahrtyp in Abhängigkeit von der Zugehörigkeit des Durchschnitts zu vorbestimmten Wertebereichen auszuwählen.

**4.** System nach einem der vorhergehenden Ansprüche, **dadurch gekennzeichnet, dass** die Mittel (10) zum Auswählen der Fahrtendenz geeignet sind, um den Prozentsatz an Zeit in einer vorbestimmten Zeitspanne, den das Fahrzeug in jedem Fahrtyp der vorbestimmten Facheinheit verbracht hat, zu berechnen und den Fahrtrend in Abhängigkeit von den berechneten Prozentsätzen auszuwählen.

**5.** System nach einem der vorhergehenden Ansprüche, **dadurch gekennzeichnet, dass** die Mittel (6, 8) zum Bestimmen des gestatteten übermäßigen Verbrauchs außerdem Mittel (12) zum Schätzen einer Verdünnungsrate des Schmieröls durch den Kraftstoff umfassen, und dass die Mittel (9, 10, 11, 12) zum Berechnen des gestatteten übermäßigen Verbrauchs geeignet sind, diesen in Abhängigkeit von der geschätzten Verdünnungsrate zu berechnen.

6. System nach Anspruch 5, **dadurch gekennzeichnet, dass** die Mittel (9, 10, 11, 12) zum Berechnen des gestatteten übermäßigen Verbrauchs geeignet sind, für diesen einen Wert zu berechnen, der im Laufe des Zunehmens der Gefährlichkeit der Verdünnungsrate für den Betrieb des Motors sinkt.

7. System nach Anspruch 6, **dadurch gekennzeichnet, dass** die Mittel (9, 10, 11, 12) zum Berechnen des gestatteten übermäßigen Verbrauchs geeignet sind, diesen auf null einzustellen, wenn der Gefährlichkeitsgrad als kritisch bestimmt wird.

8. System nach Anspruch 6 oder 7, **dadurch gekennzeichnet, dass** die Mittel (9, 10, 11, 12) zum Berechnen des gestatteten übermäßigen Verbrauchs geeignet sind, um den Gefährlichkeitsgrad in Abhängigkeit von der geschätzten Verdünnungsrate und einer Anzahl von Kilometern, die das Fahrzeug seit seinem letzten Ölwechsel zurückgelegt hat, zu bestimmen.

## Claims

1. A system for controlling the triggering of a purge of depollution means comprising means forming a NOx trap, integrated into an exhaust line of a motor vehicle engine, by changeover of the operation thereof between normal lean mode and rich purge mode, of the type comprising means (1) forming purge controller for driving the changeover of the operation of the engine between these lean and rich modes, to trigger a purge or not, under the command of means (2) forming a purge supervisor for decision to trigger the purge or not,
in which the means (2) forming a purge supervisor are connected to means (6, 8) for determining an authorized overconsumption as a function of running conditions of the vehicle and means (6, 7) for estimating an anticipated overconsumption of engine fuel in the case of triggering of a purge to validate or inhibit the triggering of a purge according to whether this estimated anticipated overconsumption is less than or greater than the determined authorized overconsumption,
and the means (6, 8) for determining the authorized overconsumption include means (13, 14) for acquisition of the speed of the vehicle and of the torque of the engine, and means (9, 10, 11, 12) for calculation of the authorized overconsumption, able to calculate the running conditions as a function of the acquired speed and torque and to calculate the authorized overconsumption as a function of the calculated running conditions,
**characterized in** including

- means (9) for section of a running type currently carried out by the vehicle from a predetermined set of running types;
- means (10) for selection of an overall running tendency carried out by the vehicle over a predetermined period of time from a predetermined set of overall running tendencies; and
- means (11) for calculation of the authorized overconsumption as a function of the selected running type and running tendency.

2. The system according to claim 1, **characterized in that** the means (9) for selection of the running type are able to calculate a running criterion according to the relationship CritR = V*(1+K*C), in which CritR is the running criterion, V is the acquired speed of the vehicle, C is the acquired torque of the engine and K is a predetermined correction parameter of the engine torque, and to select the running type as a function of the calculated running criterion.

3. The system according to claim 2, **characterized in that** the means (9) for selection of the running type are able to calculate an average of the running criterion over a first predetermined period of time and to select the running type as a function of the belonging of said average to predetermined ranges of values.

4. The system according to any one of the preceding claims, **characterized in that** the means (10) for selection of the running tendency are able to calculate the percentage of time spent, in a predetermined period of time, by the vehicle in each running type of the predetermined running set, and to select the running tendency as a function of the calculated percentages.

5. The system according to any one of the preceding claims, **characterized in that** the means (6, 8) for determining the authorized overconsumption further comprise means (12) for estimation of a dilution rate of the lubricating oil by fuel, and **in that** the means (9, 10, 11, 12) for calculation of the authorized overconsumption are able to calculate the latter as a function of the estimated dilution rate.

6. The system according to claim 5, **characterized in that** the means (9, 10, 11, 12) for calculation of the authorized overconsumption are able to calculate for the latter a decreasing value as the dilution rate presents an increasing degree of dangerousness for the functioning of the engine.

7. The system according to claim 6, **characterized in that** the means (9, 10, 11, 12) for calculation of the authorized overconsumption are able to regulate the latter to zero when the degree of dangerousness is determined as critical.

8. The system according to claim 6 or 7, **characterized in that** the means (9, 10, 11, 12) for calculation of the authorized overconsumption are able to determine the degree of dangerousness as a function of the estimated rate of dilution and of a kilometre number covered by the vehicle since its last oil change.

## FIG.1

EP 2 021 605 B1

**FIG.2**

Taux de dilution (%)

critique

élevée

moyenne

faible

Kilométrage depuis vidange

## FIG.3

23

Masse
NOx

T°C

NOx Trap

Qair

Estimation
durée de la purge

Durée purge(s)

24

Régime

Qinj

Calcul
Surconsommation
anticipée

Surconso
anticipée (%)

## FIG.4

EP 2 021 605 B1

FIG.5

Surconsommation autorisée : 1.5%

**FIG.6**

Surconsommation autorisée : 3%

**FIG.7**

EP 2 021 605 B1

**EP 2 021 605 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1134397 A2

- FR 2866957